# EUROPÄISCHE PATENTSCHRIFT

(11) **EP 0 426 044 B1**
(45) Veröffentlichungstag und Bekanntmachung des Hinweises auf die Patenterteilung: **10.05.1995**
(21) Anmeldenummer: 90120623.5
(22) Anmeldetag: 27.10.1990
(51) Int. Cl.: G03B 23/00, G03B 21/26

(54) **Diaprojektor für Gefachmagazine**
Slide projector for compartment magazine
Projecteur à diapositives pour magasin à compartiments

(30) Priorität: 02.11.1989 DE 3936379
(43) Veröffentlichungstag der Anmeldung: 08.05.1991
(73) Patentinhaber: Leica Camera GmbH, D-35606 Solms (DE)
(72) Erfinder: Hengst, Alfred, W-6335 Lahnau 2 (DE); Speier, Rolf, W-6301 Wettenberg 2 (DE)

(56) Entgegenhaltungen:
- DE-A- 3 310 765
- DE-B- 1 121 359
- FR-A- 2 559 923

## Beschreibung

Die Erfindung betrifft einen Diaprojektor für Gefachmagazine mit einer Anzeige der Gefachnummer des jeweils projizierten, gerahmten Dias.

Aus der DE 33 10 765 A1 ist eine Vorrichtung zur Überprüfung von zur Projektion gelangenden Diapositiven bekannt, in der ein Diapositiv vor seinem Einschieben in die Bildbühne des Projektors durch eine an diesem ansetzbare Vorrichtung in das Sehfeld einer Fernsehkamera gebracht und dem Vortragenden durch den mit der Kamera verbundenen Monitor zusammen mit der Diabeschriftung und der Magazingefachnummer sichtbar gemacht wird. Dazu hebt ein dem Diaschieber in der Magazinlaufrichtung vorgelagerter Greifer das zu überprüfende Dia in das Sehfeld einer Fernsehkamera hinein und vor eine Durch- bzw. Beleuchtungseinrichtung. Die auf der Vorderseite des Diarahmens befindlichen Beschriftungen werden von einer Spiegellinse neben dem Diabild und die am Magazinrand angebrachten Magazingefachnummern über einen Spiegel und eine Hilfslinse in das Fernsehkameraobjektiv eingespiegelt und auf der Fotokathode abgebildet. Diese Vorrichtung ermöglicht somit nur eine Information über das nächste zur Projektion gelangende Diapositiv.

Aus der DE 34 07 186 A1 ist eine Vorrichtung zur Anzeige der Nummern eines in einem Magazin-Dia-Projektor momentan projizierten Dias bekannt, bei der die Anzeige direkt von dem einzelnen Magazinfach abgeleitet wird. Dazu ist an einer Seitenwand des Magazins in Höhe jedes Magazinfaches eine für dieses Fach spezifische Nockenkombination angeordnet und am Projektor in Höhe der Filmbühne eine Schalterkombination vorgesehen. Die einzelnen Kontakte der Schalterkombination werden von den Nocken betätigt, die demjenigen Magazinfach zugeordnet sind, dessen Dia sich gerade im Projektionsstrahlengang befindet. Die Kontakte schalten die Segmente einer 7-Segment-LCD-Anzeige entweder direkt oder über einen Mikroprozessor, von dem auch noch weitere Projektorfunktionen gesteuert werden können. Diese bekannte Vorrichtung ermöglicht eine unmittelbare Anzeige der Nummer des projizierten Dias indessen nur für eine den Diaprojektor bedienende Person in unmittelbarer Nähe des Gerätes.

Der Erfindung liegt die Aufgabe zugrunde, einen Diaprojektor der eingangs genannten Art so auszubilden, daß die Gefachnummer des jeweils projizierten Diabildes unmittelbar mit der Betrachtung des Bildes aufgenommen und allen Zuschauern angezeigt wird.

Diese Aufgabe wird erfindungsgemäß durch die kennzeichnenden Merkmale des Patentanspruchs 1 gelöst. Vorteilhafte Weiterbildungen und Ausgestaltungen des erfindungsgemäßen Diaprojektors ergeben sich aus den Unteransprüchen.

Weitere Einzelheiten der Erfindung gehen aus der nachfolgenden Beschreibung von zwei schematisch in der Zeichnung dargestellten Ausführungsbeispielen hervor. Dabei wurde auf die Wiedergabe bekannter oder zum Verständnis der Erfindung nicht erforderlicher Bauteile verzichtet.

Es zeigen:
- Fig. 1: eine Schnittansicht der Projektionseinrichtung mit einem Teil des Projektionsstrahlenganges des Diaprojektors,
- Fig. 2: eine perspektivische Ansicht der erfindungsgemäßen Projektionseinrichtung mit einem Dia, vom Objektiv des Diaprojektors aus gesehen,
- Fig. 3: eine weitere Ausführungsform der erfindungsgemäßen Projektionseinrichtung in Schnittansicht entsprechend Fig. 1 und
- Fig. 4: eine perspektivische Ansicht der zweiten Ausführungsform.

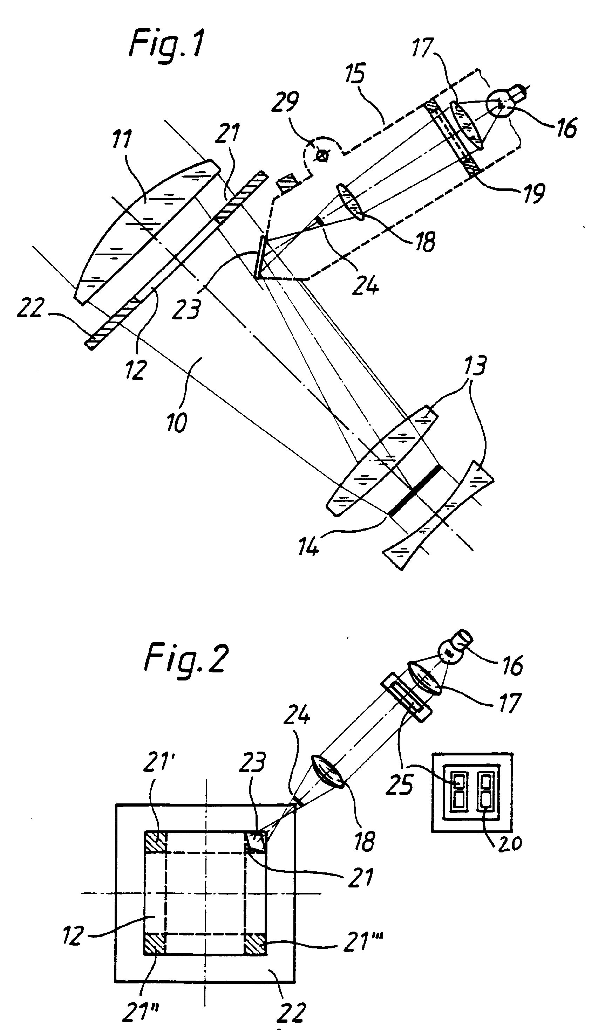

In Fig. 1 ist ein Ausschnitt aus einem herkömmlichen Projektionsstrahlengang 10 mit einem Glied eines Kondensors 11, einem davor angeordneten Dia 12 und zwei Gliedern eines Projektionsobjektivs 13 dargestellt, in welchem ein Lichtquellenbild 14 erzeugt wird. Außerhalb des eigentlichen Projektionsstrahlengangs 10 eines hier nicht gezeigten Diaprojektors ist eine Projektionseinrichtung 15 mit einer Lichtquelle 16, einer Kondensorlinse 17 und einer Objektivlinse 18 angeordnet. Als abzubildendes Objekt dieses Projektionsstrahlengangs 10 ist vor der Kondensorlinse 17 ein Gefachnummernspeicher 19 vorgesehen, der hier von einer durchleuchtbaren 7-Segment-LCD-Anzeige 20 gebildet ist. Die Steuerimpulse für letztere gehen vom Magazinantrieb, beispielsweise einem hier nicht gezeigten Magazinantriebsritzel, aus. Auf diese Weise ist eine echte Magazingefachanzeige auch bei Betätigung des Magazins von Hand gewährleistet. Im Projektionsstrahlengang 10 des Diaprojektors ist vor einer Randfläche 21 des Diarahmens 22 ein Spiegel 23 angeordnet.

In Fig. 2 ist zwecks Erläuterung der Lage des Spiegels 23 im Projektionsstrahlengang 10 neben der Projektionseinrichtung 15 das Dia 12 im Diarahmen 22 in Frontansicht dargestellt. Bekanntlich beträgt bei der Projektion eines Kleinbilddias im Format 24 x 36 mm die genutzte Fläche des Bildfensters nur 23 x 35 mm. Legt man ein Dia 12 einmal im Querformat und zum anderen im Hochformat (in Fig. 2 gestrichelt gezeichnet) übereinander, werden im Bereich der Bildfensterecken des Diarahmens 22 vier schraffiert gezeichnete, quadratische, ungenutzte Felder der Randflächen 21,21′, 21˝, 21‴ von je 6 x 6 mm gebildet. Der Spiegel 23 ist unmittelbar vor der auf diese Weise definierten rechten oberen Randfläche 21 des Diarahmens 22 angeordnet.

Bei der Projektion eines Dias 12 wird durch die Projektionseinrichtung 15 hier mittels der Objektivlinse 18 eine verkleinerte Zwischenabbildung 24 von einer dem Dia 12 zugeordneten Gefachnummer 25 erzeugt, vom Spiegel 23 in den Projektionsstrahlengang 10 umgelenkt und gemeinsam mit dem Dia 12 in einer Ebene, beispielsweise auf einer hier nicht dargestellten Projektionsleinwand, abgebildet. Dazu wird die Lage der Objektivlinse 18 in der Projektionseinrichtung 15 so gewählt, daß der Abstand der Zwischenabbildung 24 vom Spiegel 23 dem Abstand der Randfläche 21 des Diarahmens 22 vom Spiegel 23 entspricht.

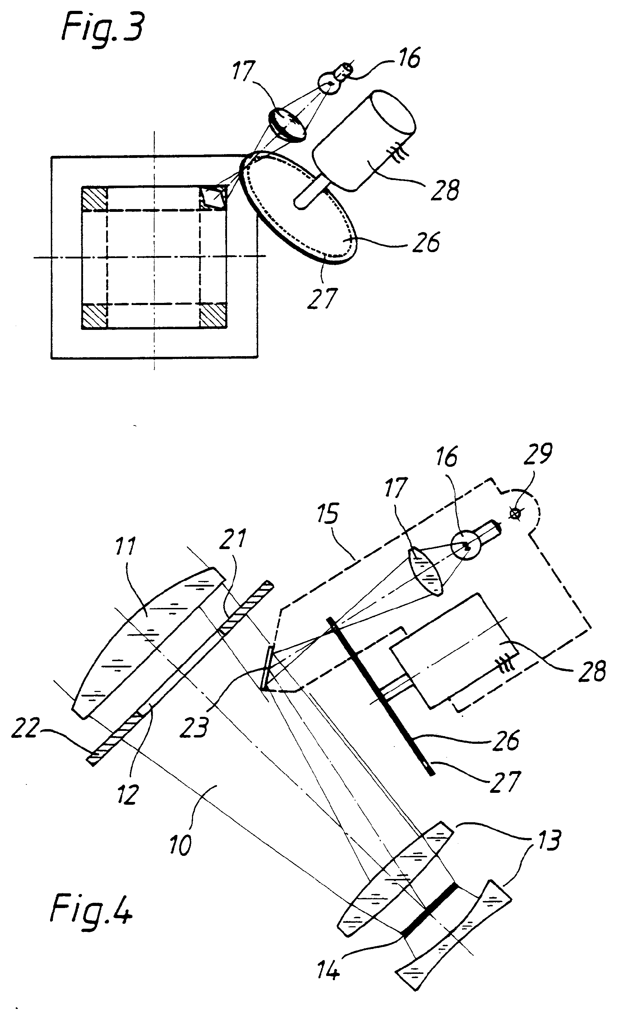

Die in den Fig. 3 und 4 gezeigte Ausführungsform unterscheidet sich von derjenigen gem. Fig. 1 und 2 im wesentlichen nur dadurch, daß als Gefachnummernspeicher 19 anstelle der 7-Segment-LCD-Anzeige eine Zahlenscheibe 26 verwendet ist, weswegen für gleiche Bauteile dieselben Bezugszeichen verwendet sind. Die Zahlenscheibe 26 weist an ihrem Rand fortlaufende Zahlen in Form von Durchbrüchen 27 entsprechend den einzelnen Gefachnummern auf und wird von einem Schrittmotor 28 angetrieben, der seinerseits Impulse vom Magazinantrieb erhält.

Bei dieser Ausführungsform können aufgrund der mechanischen Darstellbarkeit von kleinen Zahlen die Objektivlinse und damit die Zwischenabbildung im Strahlengang der Projektionseinrichtung 15 entfallen.

Die Projektionseinrichtung 15 ist wahlweise auch mittels Fernbedienung ein- und ausschaltbar und außerdem über einen Drehpunkt 29 aus dem Projektionsstrahlengang 10 des Diaprojektors ausschwenkbar, damit bei der Projektion von Diapositiven im Format 4 x 4 cm keine Abschattungen auftreten.

Im Rahmen der Erfindung liegen Variationen der beschriebenen Ausführungsbeispiele. So ist es beispielsweise möglich, anstatt der 7-Segment-LCD-Anzeige oder der Zahlenscheibe ein durchleuchtbares Zahlen-Endlosband als Gefachnummernspeicher zu verwenden. Auch eine vereinfachte Ansteuerung des Gefachnummernspeichers ist durch elektrische Wechselimpulse denkbar.

### Bezugszeichen

10 Projektionsstrahlengang
11 Kondensor
12 Dia
13 Projektionsobjektiv
14 Lichtquellenbild
15 Projektionseinrichtung
16 Lichtquelle
17 Kondensorlinse
18 Objektivlinse
19 Gefachnummernspeicher
20 7-Segment-LCD-Anzeige
21 Randfläche
22 Diarahmen
23 Spiegel
24 Zwischenabbildung
25 Gefachnummer
26 Zahlenscheibe
27 Durchbrüche
28 Schrittmotor
29 Drehpunkt

## Patentansprüche

1. Diaprojektor für Gefachmagazine mit einer Anzeige der Gefachnummer des jeweils projizierten, gerahmten Dias, **dadurch gekennzeichnet**, daß außerhalb des Projektionsstrahlengangs (10) des Diaprojektors eine Projektionseinrichtung (15) mit einem Gefachnummernspeicher (19) angeordnet ist, welche die jedem Dia (12) zugeordnete Gefachnummer (25) bei dessen Projektion auf einen Spiegel (23) projiziert, der im Projektionsstrahlengang (10) vor einer definierten Randfläche (21) des Diarahmens (22) vorgesehen ist, das Bild der Gefachnummer (25) in den Projektionsstrahlengang (10) umlenkt und gemeinsam mit dem Dia (12) in einer Ebene die der Projektionsleinwand entspricht, abbildet.

2. Diaprojektor nach Anspruch 1, **dadurch** **gekennzeichnet**, daß als Gefachnummernspeicher eine 7-Segment-LCD-Anzeige (20) vorgesehen ist, die vom Magazinantrieb gesteuert ist.

3. Diaprojektor nach Anspruch 1, **dadurch** **gekennzeichnet**, daß als Gefachnummernspeicher eine Zahlenscheibe (26) vorgesehen ist, die von einem vom Magazinantrieb gesteuerten Schrittmotor (28) angetrieben wird.

4. Diaprojektor nach Anspruch 1, **dadurch gekennzeichnet,** daß die definierte Randfläche (21) des Diarahmens (22) aus einem der vier quadratischen (21,21′,21˝,21‴) beim Projizieren im Hoch- oder Querformat ungenutzten Felder gebildet ist.

5. Diaprojektor nach Anspruch 1, **dadurch gekennzeichnet,** daß die Projektionseinrichtung (15) eine Objektivlinse (18) zur Erzeugung einer Zwischenabbildung (24) aufweist, deren Abstand vom Spiegel (23) gleich dem Abstand des Spiegels (23) von der definierten Randfläche (21) des Diarahmens (22) ist.

6. Diaprojektor nach Anspruch 1, **dadurch gekennzeichnet,** daß die Projektionseinrichtung (15) mit dem Spiegel (23) schwenkbar angeordnet ist.

## Claims

1. Transparency projector for compartment magazine with an indication of the compartment number of the respectively projected framed transparency, characterised thereby, that a projection equipment (15) with a compartment number storage device (19) is arranged outside the projection ray path (10) of the transparency projector and projects the compartment number (25) associated with each transparency (12) on the projection thereof onto a mirror (23), which is provided in the projection ray path (10) in front of a defined rim area (21) of the transparency frame (22), deflects the image of the compartment number (25) into the projection ray path (10) and images it together with the transparency (12) in a plane which corresponds with the projection screen.

2. Transparency projector according to claim 1, characterised thereby, that a 7-segment liquid crystal dipslay (20), which is controlled by the magazine drive, is provided as compartment number storage device.

3. Transparency projector according to claim 1, characterised thereby, that a number wheel (26), which is driven by a stepping motor (28) controlled by the magazine drive, is provided as compartment number storage device.

4. Transparency projector according to claim 1, characterised thereby, that the defined rim area (21) of the transparency frame (22) is formed of one of the four square fields (21, 21′, 21˝, 21‴) not used during the projection in upright or broadside format.

5. Transparency projector according to claim 1, characterised thereby, that the projection equipment (15) comprises an objective lens (18) for the production of an intermediate image (24), the spacing of which from the mirror (23) is equal to the spacing of the mirror (23) from the defined rim area (21) of the transparency frame (22).

6. Transparency projector according to claim 1, characterised thereby, that the projection equipment (15) is arranged to be pivotable with the mirror (23).

## Revendications

1. Projecteur à diapositives pour des magasins à compartiments avec une indication du numéro de compartiment de la diapositive encadrée, respectivement projetée, caractérisé en ce qu'il est disposé à l'extérieur du trajet de rayons de projection (10) du projecteur à diapositives un dispositif de projection (15) avec une mémoire pour les numéros de compartiment (19) qui projette le numéro de compartiment (25) associé à chaque diapositive (12) lors de la projection de celle-ci sur un miroir (23) qui est prévu dans le trajet de rayons de projection (10) devant une surface de bord définie (21) du cadre de diapositive (22), qui dévie l'image du numéro de compartiment (25) dans le trajet de rayons de projection (10) et qui le représente conjointement avec la diapositive (12) dans un plan qui correspond à l'écran de projection.

2. Projecteur à diapositives selon la revendication 1, caractérisé en ce qu'il est prévu comme mémoire pour les numéros des compartiments une indication LCD à 7 segments (20) qui est commandée par le dispositif d'entraînement du magasin.

3. Projecteur à diapositives selon la revendication 1, caractérisé en ce qu'il est prévu comme mémoire pour les numéros des compartiments un disque à chiffres (26) qui est entraîné par un moteur pas-à-pas (28) commandé par le dispositif d'entraînement du magasin.

4. Projecteur à diapositives selon la revendication 1, caractérisé en ce que la surface de bord définie (21) du cadre de diapositive (22) est formée par l'un des quatre champs carrés (21, 21′, 21˝, 21‴) qui n'est pas utilisé lors de la projection selon le format vertical ou transversal.

5. Projecteur à diapositives selon la revendication 1, caractérisé en ce que le dispositif de projection (15) présente une lentille de l'objectif (18) pour produire une image intermédiaire (24) dont l'espacement par rapport au miroir (23) est égal à l'espacement du miroir (23) de la face de bord définie (21) du cadre de diapositive (22).

6. Projecteur à diapositives selon la revendication 1, caractérisé en ce que le dispositif de projection (15) avec le miroir (23) est monté de façon pivotante.
